(19) Europäisches Patentamt
European Patent Office
Office européen des brevets

(11) **EP 2 541 133 A2**

(12) # EUROPÄISCHE PATENTANMELDUNG

(43) Veröffentlichungstag:
**02.01.2013 Patentblatt 2013/01**

(51) Int Cl.:
*F21V 5/00* (2006.01) *F21V 7/04* (2006.01)
*G02B 6/42* (2006.01) *F21K 99/00* (2010.01)
*F21Y 101/02* (2006.01) *F21Y 105/00* (2006.01)

(21) Anmeldenummer: **12004206.4**

(22) Anmeldetag: **31.05.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **29.06.2011 DE 102011107355**

(71) Anmelder: **ZETT OPTICS GmbH**
**38116 Braunschweig (DE)**

(72) Erfinder: **Dreher, Sabine**
**30459 Hannover (DE)**

(74) Vertreter: **Plöger, Jan Manfred et al**
**Gramm, Lins & Partner GbR**
**Theodor-Heuss-Strasse 1**
**38122 Braunschweig (DE)**

(54) **Punktleuchte**

(57) Die Erfindung betrifft eine Punkleuchte, die als Spot-Strahler angewendet werden kann, aufweisend mehrere Leuchtdioden, einen Lichtmischstab, eine Streuscheibe oder eine Streufolie, einen konischen Hohlreflektor und eine Linse. Damit kann im Nahfeld ein homogenes Lichtfeld erreicht werden. Die Leuchtdioden können unterschiedliche Farben aufweisen.

Fig. 1

EP 2 541 133 A2

**Beschreibung**

Die Erfindung betrifft eine Punktleuchte mit (a) einer ersten Leuchtdiode, (b) einer zweiten Leuchtdiode, (c) zumindest einer dritten Leuchtdiode, (d) einem im Lichtpfad hinter den Leuchtdioden angeordneten Lichtmischstab, (e) einer im Lichtpfad hinter dem Lichtmischstab angeordneten Streuvorrichtung und (f) einem im Lichtpfad hinter der Streuvorrichtung angeordneten Reflektor.

Derartige Punktleuchten werden auch als Spot-Strahler bezeichnet und dienen beispielsweise in Ladenlokalen zum Anleuchten der Ware. Bekannt sind Punktleuchten mit beispielsweise drei Leuchtdioden, die in Ausnehmungen eines als Vollkörper ausgebildeten Lichtmischstabs liegen, wobei der Lichtmischstab das von den Leuchtdioden ausgehende Licht dadurch leitet, dass an seinen Grenzen Totalreflexion eintritt. Das so geführte Licht trifft auf eine Streuvorrichtung, hinter der sich ein Parabolreflektor anschließt.

Zum Erzielen einer hohen Leuchtkraft werden mehrere Leuchtdioden verwendet, die meist unterschiedliche Farben haben. Es ist dann notwendig, die einzelnen Farben der LEDs zu mischen. Dieses Mischen setzt einen Lichtmischstab voraus, damit auf der Streuvorrichtung bereits gemischtes Licht ankommt, da sonst im Fernfeld der Leuchte kein farblich homogenes Licht entsteht.

An Punktleuchten werden zumindest vier Anforderungen gestellt, die kumulativ erfüllt sein müssen. Eine wichtige Voraussetzung ist, dass die Punktleuchte im Fernfeld einen möglichst schmalen Abstrahlwinkel besitzt, so dass das beleuchtete Objekt, beispielsweise ein Kleidungsstück, durch die Beleuchtung akzentuiert werden kann.

Relevant ist zudem eine hohe Beleuchtungsstärke, so dass die Punktleuchte als Ersatz für existierende Leuchten, beispielsweise mit Halogenlampen, in Betracht kommt.

Wichtig ist auch ein hinreichend kurzer Bauraum, damit die Punktleuchte dicht zu einer Wand oder Decke installiert werden kann. Besonders wichtig ist, dass die Punktleuchte sowohl im Nahfeld als auch im Fernfeld ein hinreichend homogenes Licht geben soll. Bekannte Punktleuchten erreichen zwar ein homogenes Fernfeld, im Nahbereich zeigen sie jedoch Inhomogenitäten, die für die Beleuchtung beispielsweise von weißen Kleidungsstücken nicht hinreichend klein sind.

Der Erfindung liegt die Aufgabe zugrunde, eine Punktleuchte anzugeben, die gleichzeitig homogen im Fernfeld und Nahfeld Ist, ein hinreichend gut kollimiertes Lichtbündel emittiert, einen kurzen Bauraum besitzt und eine hohe Beleuchtungsstärke hat.

Im Stand der Technik sind Punktleuchten bekannt, die drei der vier Forderungen erfüllen. Um insbesondere im Textil-Einzelhandel erfolgreich eingesetzt werden zu können, ist es aber unabdingbar, dass alle vier Forderungen gleichzeitig erfüllt sind. Die Erfindung löst das Problem durch eine gattungsgemäße Punktleuchte, bei der der Reflektor ein Hohlreflektor ist, eine konische Spiegelfläche hat und bei der im Lichtpfad hinter dem Hohlreflektor eine Linse angeordnet ist.

Vorteilhaft an dieser Punktleuchte ist, dass sie die oben genannten vier Forderungen erfüllt. Es hat sich gezeigt, dass es zum Erfüllen aller vier Forderungen notwendig ist, vom bekannten Konzept eines Parabolreflektors oder eines auf Totalreflexion beruhenden Reflektors zu verzichten, da ansonsten kein im Nahfeld homogenes Lichtfeld erreichbar ist. Der Grund dafür ist der Folgende.

Um eine hinreichend gute Kollimation des ausgesendeten Lichtbündels zu erreichen, muss das von den Leuchtdioden ausgehende Licht aufgefächert werden. Dabei kommt es zu einem Verlust an Homogenität, wobei dieser Verlust bei einem konischen Reflektor entgegen der Erwartung am geringsten ist. Allerdings erfordert der konische Reflektor eine Linse, um einen allzu divergenten Lichtstrahl zu vermeiden.

Im Rahmen der vorliegenden Beschreibung wird unter dem Lichtpfad die Gesamtheit aller Lichtstrahlen, die von den Leuchtdioden ausgehen, verstanden. In anderen Worten ist der Lichtpfad die Gesamtheit aller Lichtstrahlen von Licht, das von den Leuchtdioden ausgeht. Alternativ formuliert liegen die Leuchtdioden, der Lichtmischstab, die Streuvorrichtung, der Reflektor und die Linse hintereinander auf der optischen Achse.

Unter dem Merkmal, dass die Spiegelfläche konisch ist, ist insbesondere zu verstehen, dass es sich im Idealfall um eine mathematisch ideal konische Fläche handelt, dass es aber insbesondere möglich ist, dass von dieser technisch nicht erreichbaren Idealfläche Abweichungen vorliegen. Je geringer die Abweichungen sind, desto besser ist in der Regel das Ergebnis. Es lassen sich jedoch auch gute Ergebnisse erzielen, wenn die Reflektorfläche nicht streng konisch ist. Günstig ist es, wenn der Reflektor nicht facettiert ist. Das heißt, dass die Spiegelfläche in strengem Sinne konisch ist.

Bei der Linse handelt es sich vorzugsweise um eine Fresnellinse, da so ein besonders geringer Bauraum erreichbar ist.

Es ist möglich, nicht aber notwendig, dass der Lichtmischstab eine oberflächliche Welligkeit besitzt. Es hat sich gezeigt, dass mit glatten Mischstäben eine gute Mischwirkung erreichbar ist. Vorzugsweise besitzt der Lichtmischstab den Querschnitt eines regelmäßigen n-Ecks. Günstig ist, wenn der Lichtmischstab prismatisch ist. Eine besonders hohe Mischwirkung wird erreicht, wenn die Zahl der Leuchtdioden und die Zahl n an Flächen des n-Ecks teilerfremd sind. Werden beispielsweise vier Leuchtdioden verwendet, ist ein Lichtmischstab in Form eines regelmäßigen Fünfecks vorteilhaft.

Vorzugsweise ist ein Fernfelddurchmesser kleiner als das Achtzigfache, insbesondere das Sechzigfache, des maximalen Abstands zweier Leuchtdioden. Es hat sich herausgestellt, dass ein kurzer Bauraum nur dann erreichbar ist, wenn der Lichtmischstab hinreichend kurz ist. Ein kurzer Lichtmischstab erzeugt aber nur dann eine hinreichend hohe Lichtmischung, wenn sein Durchmesser nicht zu groß ist, da ansonsten die Zahl der Reflexionen zu klein ist. Ein Lichtmischstab mit einem kleinen Durchmesser setzt jedoch nur wenig voneinander beabstandete Leuchtdioden voraus, was wegen der Wärmeentwicklung nachteilig ist. Unter dem Fernfelddurchmesser wird insbesondere der Bereich verstanden, in dem die Beleuchtungsstärke im Abstand von 2 Metern hinter der Linse größer ist als die Hälfte des Maximalwerts der Beleuchtungsstärke.

Vorzugsweise beträgt ein Verhältnis zwischen einem Halbintensitätsdurchmesser ($D_{50\%}$) und einem Zehntelintensitätsdurchmesser ($D_{10\%}$) zumindest 0,5. Der Halbintensitätsdurchmesser ist der Durchmesser des Lichtflecks, in dem die Lichtintensität zumindest 50% der Maximalintensität beträgt. Der Zehntelintensitätsdurchmesser ist der Durchmesser des Lichtflecks, in dem die Lichtintensität zumindest 10% der Maximalintensität beträgt. Ist zumindest einer der Lichtflecken nicht kreisrund, wird der Durchmesser des Kreises verwendet, der die gleiche Fläche hat wie der betreffende Lichtfleck. Eine derartige gleichmäßige Beleuchtung ist bislang nicht erreichbar.

Vorzugsweise besitzt der Hohlreflektor eine Drehsymmetrieachse, wobei die erste Leuchtdiode eine erste Strahlrichtung hat, die mit der Drehsymmetrieachse einen Winkel von höchstens 10° bildet, wobei die zweite Leuchtdiode eine zweite Strahlrichtung hat, die mit der Drehsymmetrieachse einen Winkel von höchstens 10° bildet, wobei die Drehsymmetrieachse zentrisch durch die Strahlvorrichtung und/oder die Linse verläuft. Es hat sich gezeigt, dass auf diese Weise die oben genannten Anforderungen besonders gut erfüllt werden.

Vorzugsweise besitzt der Lichtmischstab eine Stablänge und einen Innenkreisdurchmesser, wobei die Stablänge höchstens das Zweieinhalbfache, insbesondere das Doppelte, des Innenkreisdurchmessers beträgt. Es ergibt sich so eine besonders kompakte Bauweise.

Vorzugsweise hat der Hohlreflektor einen Öffnungswinkel, der größer ist als 15°, wobei der Öffnungswinkel vorzugsweise kleiner ist als 40°.

Vorzugsweise sind die Leuchtdioden Farb-Leuchtdioden unterschiedlicher Grundfarben, wobei die Leuchtdioden, der Lichtmischstab, die Streuvorrichtung und der Hohlreflektor so ausgebildet sind, dass eine relative Farbinhomogenität im Lichtpfad unmittelbar hinter der Linse höchstens 0,03 beträgt, wobei die Farbinhomogenität berechnet wird durch Messen der Beleuchtungsstärke in kreisförmigen Rasterpunkten, die in ein schachbrettartiges Muster von 15 mal 15 Quadraten eingepasst sind, wobei alle Rasterpunkte voll beleuchtet sind, durch Bestimmen der CIE 1976-Farbraum-Koordinaten u' v' der Rasterpunkte und durch Berechnen der relativen Farbinhomogenität als mittlerer Farbabstand der Rasterpunkte vom Schwerpunkt im CIE 1976-Farbraum.

Besonders günstig ist es in diesem Fall, wenn die Streuvorrichtung ein lambertscher Streuer ist.

Gemäß einer bevorzugten Ausführungsform sind die Leuchtdioden Weißlicht-Leuchtdioden und die Leuchtdioden, der Lichtmischstab, die Streuvorrichtung und der Hohlreflektor sind so ausgebildet, dass eine relative Beleuchtungsinhomogenität im Lichtstrom unmittelbar hinter der Linse höchstens 0,2 beträgt, wobei die relative Beleuchtungsinhomogenität G berechnet wird durch Messen der Beleuchtungsstärke in kreisförmigen Rasterpunkten, die in ein schachbrettartiges Muster von 15 mal 15 Quadraten eingepasst sind, wobei alle Rasterpunkte (34) voll beleuchtet sind, und danach Berechnen der relativen Beleuchtungsinhomogenität G als relative Standardabweichung der Beleuchtungsstärken E.

Vorzugsweise ist die Streuvorrichtung so ausgebildet ist, dass bei Einstrahlung eines kollimierten Strahlbündels eine um die Einstrahlrichtung rotationssymmetrische Gaußsche Strahlstärkeverteilung erzeugt wird, wobei der Abfall auf den $\dfrac{1}{e^2}$ -Teil bei $\pm (40\pm10)°$ erreicht wird. In anderen Worten ist die Streuvor-richtung in diesem Fall ein gaußscher Streuer.

Da ein lambertscher Strahler zu einer hinsichtlich des Winkels besonders breiten Streuung führt, dass heißt, dass große Streuwinkel besonders häufig sind, ist es überraschend, dass eine gaußsche Streuvorrichtung, also eine Streuvorrichtung, bei der eine Streuung unter hohen Winkeln zur optischen Achse seltener geschieht als beim lambertschen Strahler, ein besseres Ergebnis liefert als ein lambertscher Strahler.

Günstig ist es, wenn der Lichtmischstab eine Länge von höchstens dem Fünffachen, insbesondere dem Vierfachen, des maximalen Abstands zweier Leuchtdioden aufweist. Günstig ist zudem, wenn die Länge des Hohlreflektors, also seine Erstreckung entlang der optischen Achse der Punktleuchte, zumindest das Neunfache und/oder höchstens das 15-fache der Länge des Lichtmischstabs beträgt. Es hat sich gezeigt, dass so eine kurze Bauform bei hoher Homogenität des Lichtfelds erreichbar ist.

Im Folgenden wird die Erfindung anhand der beigefügten Zeichnungen näher erläutert. Dabei zeigt

Figur 1       einen schematischen Querschnitt durch eine erfindungsgemäße Punktleuchte,

Figur 2    einen zweiten Querschnitt durch eine erfindungsgemäße Punktleuchte mit einzelnen Lichtstrahlen und

Figur 3    ein Raster mit den Rasterpunkten, an denen die Beleuchtungsstrecke zu messen ist.

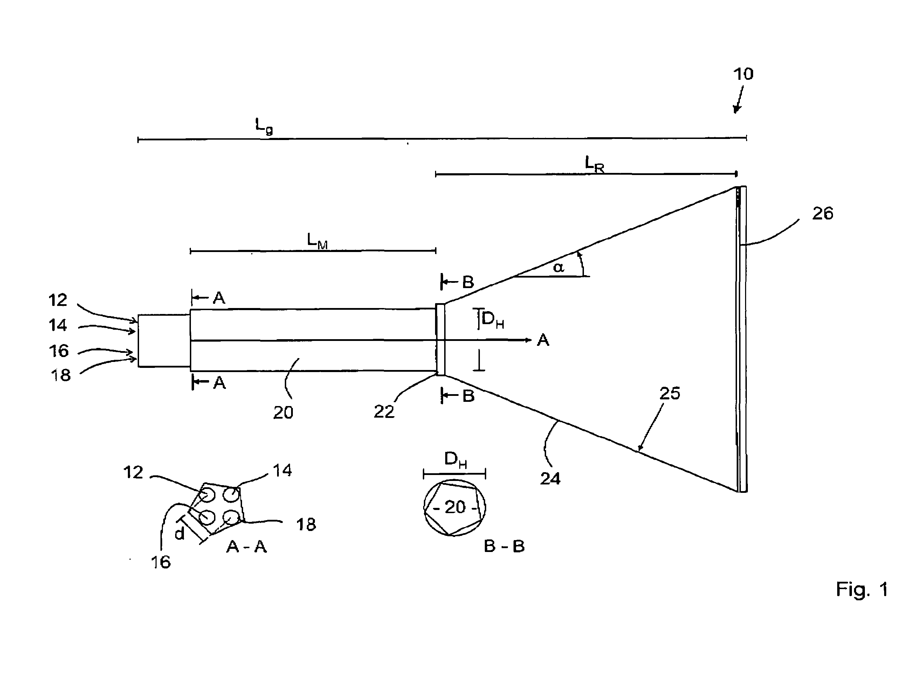

Figur 1 zeigt eine Punktleuchte 10 mit einer ersten Leuchtdiode 12, einer zweiten Leuchtdiode 14 und einer dritten Leuchtdiode 16, einer vierten Leuchtdiode 18 und einem hinter den Leuchtdioden 12, 14, 16, 18 angeordneten Lichtmischstab 20. Der Ausschnitt A-A zeigt einen Blick auf den Schnitt gemäß A-A im großen Bild. Es ist zu erkennen, dass die vier Leuchtdioden 12, 14, 16, 18 in einer vierzähligen symmetrischen Anordnung angeordnet sind, dass heißt auf den Ecken eines Quadrats, und einen maximalen Abstand d voneinander haben. Die vier Leuchtdioden 12, 14, 16, 18 sind alle weiße Leuchtdioden (LEDs).

Der Lichtmischstab 20 besitzt eine Länge $L_M$, die beispielsweise 1 cm beträgt. Wie das Teilbild mit der Bezeichnung B-B zeigt, hat der Lichtmischstab 20 einen Hüllkreisdurchmesser $D_H$, der vorzugsweise zwischen 1 und 1,5 cm liegt. Im Lichtpfad A hinter dem Lichtmischstab 20 ist eine Streuvorrichtung 22 in Form einer Streuscheibe angeordnet, die eine gaußsche Streucharakteristik hat. Unmittelbar hinter der Streuvorrichtung 22 ist ein Hohlreflektor 24 angeordnet. Der Hohlreflektor ist ein Metallreflektor und hat eine Spiegelfläche 25, eine Länge $L_R$ von beispielsweise zwischen 5 und 9 cm und eine Drehsymmetrieachse S. Ein Öffnungswinkel α liegt vorzugsweise zwischen 15 und 40°. Hinter dem Hohlreflektor 24 befindet sich eine Linse 26, im vorliegenden Fall in Form einer Fresnellinse. Eine Gesamtlänge $L_g$ der Punktleuchte 10 liegt in der Regel unter 15 cm. In den Figuren nicht eingezeichnet sind eine Stromversorgung der Leuchtdioden 12, 14, 16, 18 sowie etwaige Schalter und gegebenenfalls ein Gehäuse, an dem die bisher genannten Komponenten befestigt sind.

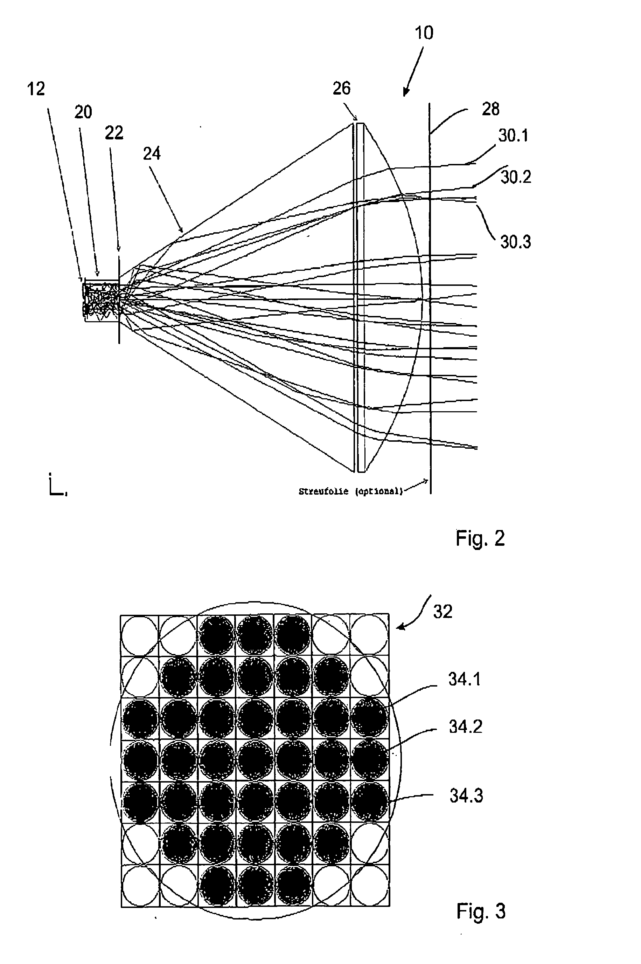

Figur 2 zeigt eine zweite Ausführungsform einer erfindungsgemäßen Punktleuchte, bei der der Hohlreflektor 24 als Metallreflektor ausgeführt ist. Die Streuvorrichtung 22 ist durch eine Streufolie gebildet. Der Lichtmischstab 20 ist ein pentagonaler Mischstab. Es sind erneut vier Leuchtdioden vorhanden. Im Lichtpfad hinter der Linse 26 ist eine weitere Streuvorrichtung 28 angeordnet.

Eingezeichnet sind eine Vielzahl an Lichtstrahlen 30.1, 30.2, .... Es ist zu erkennen, dass sich im Nahfeld unmittelbar hinter der Linse 26 ein homogenes Lichtfeld ausgebildet hat.

Figur 3 zeigt das schachbrettartige Muster 32, in das die Rasterpunkte 34.1, 34.2, ... eingepasst sind. Die Rasterpunkte berühren einander oder haben einen Abstand von höchstens 1/10tel eines Radius eines Rasterpunkts. Zur Bestimmung der Beleuchtungsinhomogenität wird die Beleuchtungsstärke $E_i$ in Rasterpunkten i = 1, 2, ..., n gemessen, die in ein schachbrettartiges Muster von 15 mal 15 Quadraten eingepasst sind. Die Rasterpunkte sind dabei so angeordnet, dass alle Rasterpunkte voll beleuchtet sind, nicht voll beleuchtete Rasterpunkte gehen nicht in die Berechnung ein. Die mittlere Beleuchtungsstärke $\overline{E}$ ist definiert als

$$\overline{E} := \frac{1}{n}\sum_{i=1}^{n} E_i \,. \qquad \text{Formel 1}$$

Die relative Beleuchtungsinhomogenität G ist definiert als die relative Standardabweichung der Beleuchtungsstärke:

$$G := \frac{\sqrt{\dfrac{1}{n}\sum_{i=1}^{n}\left(E_i - \overline{E}\right)^2}}{\overline{E}} \qquad \text{Formel 2}$$

Der Farbort ist im CIE 1976-Farbraum definiert durch (u', v'). Der Farbschwerpunkt $\left(\overline{u'}, \overline{v'}\right)$ ist definiert zu

4

$$\left(\overline{u'},\overline{v'}\right) := \left(\frac{1}{n}\sum_{i=1}^{n}u'_{i},\frac{1}{n}\sum_{i=1}^{n}v'_{i}\right) \qquad \text{Formel 3}$$

Der mittlere Farbabstand F ist definiert als:

$$F := \frac{1}{n}\sum_{i=1}^{n}\sqrt{\left(u'_{i}-\overline{u'}\right)^{2}+\left(v'_{i}-\overline{v'}\right)^{2}} \qquad \text{Formel 4}$$

Durch die oben geschilderte Konstruktion wird eine Beleuchtungsinhomogenität G von 0,17 oder besser erreicht. Sind die Leuchtdioden 12, 14, 16, 18 nicht weiß, sondern zumindest drei von ihnen farbig und strahlen in unterschiedlichen Grundfarben, so wird ein mittlerer Farbabstand F von unter 0,04 erreicht.

**Bezugszeichenliste**

| 10 | Punktleuchte |
|---|---|
| 12 | erste Leuchtdiode |
| 14 | zweite Leuchtdiode |
| 16 | dritte Leuchtdiode |
| 18 | vierte Leuchtdiode |

| 20 | Lichtmischstab |
|---|---|
| 22 | Streuvorrichtung |
| 24 | Hohlreflektor |
| 25 | Spiegelfläche |
| 26 | Linse |
| 28 | Streuvorrichtung |

| 30 | Lichtstrahlen |
|---|---|
| 32 | schachbrettartiges Muster |
| 34 | Rasterpunkte |

$\alpha$    Öffnungswinkel

A    Lichtpfad
d    maximaler Abstand
$D_H$    Hüllkreisdurchmesser
F    Farbabstand
G    Beleuchtungsinhomogenität

$L_M$    Lichtmischstablänge
$L_R$    Hohlreflektorlänge
$L_g$    Gesamtlänge
S    Drehsymmetrieachse
i    Laufindex i = 1, 2, 3, ...
n    Zahl der Rasterpunkte

**Patentansprüche**

**1.** Punktleuchte mit

(a) einer ersten Leuchtdiode (12),
(b) einer zweiten Leuchtdiode (14),
(c) zumindest einer dritten Leuchtdiode (16),
(d) einem im Lichtpfad (A) hinter den Leuchtdioden (12, 14, 16, 18) angeordneten Lichtmischstab (20) und
(e) einem im Lichtpfad (A) hinter dem Lichtmischstab (20) angeordneten Reflektor (24), der ein Hohlreflektor (24) ist und eine konische Spiegelfläche (25) hat ,
(f) wobei im Lichtpfad (A) hinter dem Hohlreflektor (24) eine Linse (26) angeordnet ist,

**dadurch gekennzeichnet, dass**

(g) im Lichtpfad (A) hinter dem Lichtmischstab (20) und vor dem Reflektor (24) eine Streuvorrichtung (22) angeordnet ist,
(h) wobei der Lichtmischstab (20) eine Stablänge ($L_M$) und einen Hüllkreisdurchmesser ($D_H$) besitzt und wobei die Stablänge ($L_M$) höchstens das Zweieinhalbfache, insbesondere das Eineinhalbfache, des Hüllkreisdurchmessers ($D_H$) beträgt
(i) wobei der Hohlreflektor (24) einen Öffnungswinkel ($\alpha$) besitzt, der größer ist als 15° und kleiner als 40°,
(j) wobei die Streuvorrichtung (22) so ausgebildet ist, dass bei Einstrahlung eines kollimierten Strahlbündels eine um die Einstrahlrichtung rotationssymmetrische Gaußsche Strahlstärkeverteilung erzeugt wird, wobei der

Abfall auf den $\dfrac{1}{e^2}$-Teil bei $\pm\,(40\pm2)°$ erreicht wird.

2. Punktleuchte nach Anspruch 1, **dadurch gekennzeichnet, dass**

- ein Fernfelddurchmesser des Lichtfelds in einem Abstand von zwei Metern im Lichtpfad (A) hinter der Linse (26) kleiner ist als das achtzigfache des maximalen Abstands (d) zweier Leuchtdioden.

3. Punktleuchte nach einem der vorstehenden Ansprüche, **dadurch gekennzeichnet, dass** ein Verhältnis zwischen einem Halbintensitätsdurchmesser ($D_{50\%}$) und einem Zehntelintensitätsdurchmesser ($D_{10\%}$) zumindest 0,5 beträgt.

4. Punktleuchte nach einem der vorstehenden Ansprüche, **dadurch gekennzeichnet, dass**

- der Hohlreflektor (24) eine Drehsymmetrieachse (S) besitzt,
- die erste Leuchtdiode eine erste Strahlrichtung hat, die mit der Drehsymmetrieachse (S) einen Winkel von höchstens 10° bildet,
- die zweite Leuchtdiode eine zweite Strahlrichtung hat, die mit der Drehsymmetrieachse (S) einen Winkel von höchstens 10° bildet, und dass
- die Drehsymmetrieachse (S) zentrisch durch die Streuvorrichtung (22) und/oder die Linse (26) verläuft.

5. Punktleuchte nach einem der vorstehenden Ansprüche, **dadurch gekennzeichnet, dass**

(i) die Leuchtdioden (12, 14, 16, 18) Farb-Leuchtdioden unterschiedlicher Grundfarben sind und
(ii) die Leuchtdioden (12, 14, 16, 18), der Lichtmischstab (20), die Streuvorrichtung (22) und der Hohlreflektor (24) so ausgebildet sind, dass eine relative Farbinhomogenität (F) unmittelbar hinter der Linse (26) höchstens 0,03 beträgt,
(iii) wobei die Farbinhomogenität (F) berechnet wird durch

- Messen der Beleuchtungsstärke (E) in Rasterpunkten (34), die in ein schachbrettartiges Muster (32) von 15 mal 15 Quadraten eingepasst sind, wobei alle Rasterpunkte (34) voll beleuchtet sind,
- Bestimmen der CIE 1976-Farbraum-Koordinaten (u', v') der Rasterpunkte (34) und
- Berechnen der relativen Farbinhomogenität als mittlerer Farbabstand (F) der Rasterpunkte (34) vom Schwerpunkt im CIE 1976-Farbraum.

6. Punktleuchte nach einem der vorstehenden Ansprüche, **dadurch gekennzeichnet, dass**

(i) die Leuchtdioden (12, 14, 16, 18) Weißlicht-Leuchtdioden sind und
(ii) die Leuchtdioden, der Lichtmischstab (20), die Streuvorrichtung (22) und der Hohlreflektor (24) so ausgebildet sind, dass eine relative Beleuchtungsinhomogenität im Lichtstrom unmittelbar hinter der Linse (26) höchstens 0,2 beträgt,
(iii) wobei die relative Beleuchtungsinhomogenität (G) berechnet wird durch

      - Messen der Beleuchtungsstärke in Rasterpunkten (34), die in ein schachbrettartiges Muster (32) von 15 mal 15 Quadraten eingepasst sind, wobei alle Rasterpunkte (34) voll beleuchtet sind, und
      - Berechnen der relativen Beleuchtungsinhomogenität (G) als relative Standardabweichung der Beleuchtungsstärken (E).

7. Punktleuchte nach einem der vorstehenden Ansprüche, **dadurch gekennzeichnet, dass** der Hohlreflektor (24) so ausgebildet ist, dass die relative Beleuchtungsinhomogenität (G) im Lichtpfad (A) unmittelbar hinter der Linse (26) höchstens das Fünffache der relativen Beleuchtungsinhomogenität unmittelbar hinter der Streuvorrichtung (22) beträgt.

Fig. 1

EP 2 541 133 A2

Streufolie (optional)

Fig. 2

Fig. 3